Europäisches Patentamt

European Patent Office

Office européen des brevets

(11) Publication number: **0 052 395**
**A1**

(12) **EUROPEAN PATENT APPLICATION**

(21) Application number: **81201210.2**

(22) Date of filing: **29.10.81**

(51) Int. Cl.³: **H 04 N 3/08**

(30) Priority: **10.11.80 GB 8036083**

(43) Date of publication of application:
**26.05.82 Bulletin 82/21**

(84) Designated Contracting States:
**DE FR GB NL SE**

(71) Applicant: **PHILIPS ELECTRONIC AND ASSOCIATED INDUSTRIES LIMITED**
**ARUNDEL GREAT COURT 8 Arundel Street**
**London WC2R 3DT(GB)**

(84) Designated Contracting States:
**GB**

(71) Applicant: **N.V. Philips' Gloeilampenfabrieken**
**Pieter Zeemanstraat 6**
**NL-5621 CT Eindhoven(NL)**

(84) Designated Contracting States:
**DE FR NL SE**

(72) Inventor: **Needham, Martin John**
**c/o M.E.L. Manor Royal**
**Crawley West Sussex RH10 2PZ(GB)**

(74) Representative: **Boxall, Robin John et al,**
**Philips Electronic and Associated Ind. Ltd. Patent**
**Department Mullard House Torrington Place**
**London WC1E 7HD(GB)**

(54) Imaging apparatus.

(57) An apparatus is described for scanning a scene in bands of lines and reconstructing the scene in visible light. Use is made of a mirror prism (1), whose mirrors (3, 4) make a sequence of various tilt angles with the axis of rotation 2 of the prism. According to the invention, the prism has an even number of mirrors, the scanning (22) and reconstruction (16) locations being on diametrically opposite sides of the prism and the sequence of tilt angle being such that the sum of the tilt angles of any pair of diametrically opposite mirrors is constant.

FIG.1

EP 0 052 395 A1

"Imaging apparatus".

The invention relates to an apparatus for producing a visible image of a scene by means of non-visible radiation from the scene, which apparatus, in this order, comprises: a mirror prism which is rotatable about an axis and which includes a plurality of planar mirrors which form an equiangular polygon in a cross-section normal to said axis and which make a sequence of various tilt angles with said axis, an objective lens arranged to receive radiation from said scene _via_ said planar mirrors, a linear array of radiation-sensitive detectors, a linear array of light sources coupled one each _via_ an amplifier to a corresponding detector in said detector array, and viewing means arranged to receive the light beams reflected by said planar mirrors and coming from the light sources.

In U.S. Patent Specification 3,626,091 a thermal imaging apparatus is disclosed comprising a linear array of infra-red detectors and a corresponding linear array of modulated light sources, scanning is effected in a plurality of bands of lines across the scene and the reconstruction, which is synchronized with the scanning, is carried out by a single rotating mirror prism having planar mirrors set at various angles around the axis of rotation. The mirror prism comprises twice as many mirror faces as there are bands scanned in the scene. Scanning is carried out by one set of mirrors while reconstruction is carried out by a second set of mirrors. This results in either bulky mirror prisms or in relatively small aperture mirrors which restrict the sensitivity of the apparatus.

It is an object of the invention to reduce these restrictions by employing one set of mirrors on the prism for both scanning and reconstruction. To this end the apparatus in accordance with the invention is characterized in that said prism has an even number of planar mirrors, in that said scanning and reconstruction locations are on diametrically opposite sides of said prism, in that the difference in tilt angles of the planar mirrors is an integral multiple of half the angular length, of said detector array, and in that the sequence of tilt angles around the prism is such that the sum of the tilt angles of any pair of mirrors simultaneously present at the scanning and reconstruction locations is constant.

Methods of manufacturing mirror prisms for use in such imaging apparatus are described in British Patent Application 7942998 (PHB 32682).

It is operationally convenient if the observer sees the reconstructed scene as through he were looking straight through the apparatus at the original scene, as he would do when using an optical telescope. This is achieved in apparatus in accordance with the invention by the diametrically opposite placement of said scanning and reconstruction locations. The mean angle of tilt of the planar mirrors may be $45^{\circ}$, the axis of said objective then being parallel to the prism axis.

The selection of different mirror tilt angles results in the reconstructed visible picture being seen as an erect virtual image in said planar mirrors.

To avoid vignetting of the scanned image, the observer's eye pupil should, in principle, be placed at the reconstruction location. An eyepiece may be used which images the pupil at the reconstruction location onto the observer's pupil with a comfortable eye relief without inverting the image.

To alter the field of view of the thermal imaging apparatus, a telescope may be placed at the scanning location between the incoming infra-red radiation and the planar mirrors. A non-inverting Galilean telescope can provide scene magnification by a factor of between 2 and 3, or, when reversed, a minification and consequent increase of field of view by the same factor. Such a telescope employing a positive silicon lens and a germanium negative lens is described in British Patent Specification No. .1,530.066. Alternatively an inverting astronomical telescope may be used to achieve greater magnification factors without the penalty of a large diameter positive lens which would be needed with the Galilean telescope. In this case, an inverting eyepiece is used at the reconstruction location to provide an erect image for viewing. The objective of the astronomical telescope may be a doublet comprising a silicon positive lens and a germanium negative lens, and the lens usually described as the eyepiece of the telescope may be a germanium positive lens.

Embodiments of the invention will now be described, by way of example, with reference to the accompanying drawings, in which:

Figure 1 shows a diagrammatic sectional elevation of a thermal imaging apparatus,

Figure 2 shows a sectional plan view of the apparatus of Figure 1, and

Figure 3 illustrates the selection of mirror tilt angles in accordance with the invention.

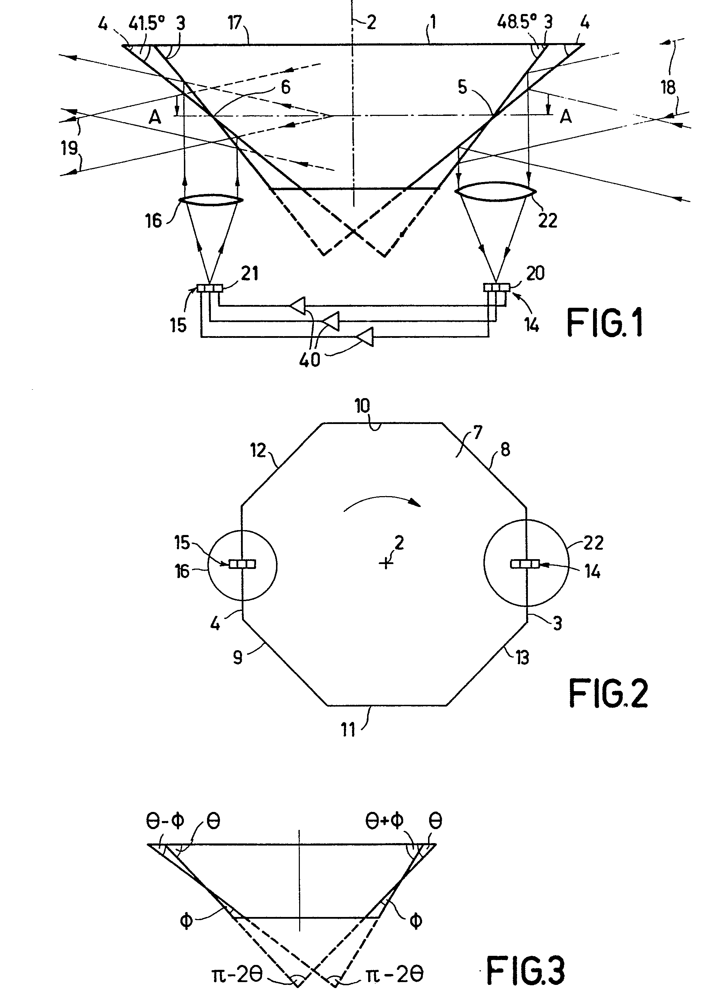

Referring to Figure 1, the mirror prism 1 is shown in section through the axis 2 of prism rotation. A pair of diametrically opposite planar mirrors 3 and 4 are shown in the two positions they occupy at the scanning 5 and reconstruction 6 locations, which are shifted by a half turn of prism rotation. Figure 2 shows a section 7 of the prism 1 by the plane AA of Figure 1, which section is a regular octagon. The planar mirrors 3, 4, 8, 9, 10, 11, 12 and 13 make a sequence of various tilt angles with axis 2 about individual axes laying in the plane of section AA, and each axis being parallel to one side of the regular octagon.

Infra-red radiation from a distant scene is reflected by a planar mirror currently at the scanning location into a positive lens 22 which forms a real image of the scene in the plane of a linear array 14 of, for example, twelve regularly spaced radiation detectors aligned along a radius extending from the axis of rotation 2. For clarity, only three detectors, amplifiers and sources are shown. The mean tilt angle of the planar mirrors with axis 2 is 45°. Upon rotation of the prism about axis 2 by means not shown, the image of the scene moves transversely across the linear array 14 and also rotates in its own plane through an angle equal to the rotational angle of the prism, scanning a curved band of twelve lines across the scene. Simultaneously, this band of lines is reconstructed as a visible band of lines by viewing a linear array 15 of twelve light sources, modulated in intensity one each by the output of a corresponding detector in the array 14 by an amplifier 40, as virtual light sources in a planr mirror diametrically opposite to the planar mirror at the scanning location. The motion of the planar mirror at the reconstruction location causes the movement of the virtual light sources across the field of view of an observer in a curved band of twelve lines corresponding to the curved band of lines scanned in the infra-red scene. Despite the curved bands, therefore, the picture details are reconstructed in their correct location. Furthermore, since in practice the horizontal field of view is limited, to, for example, ± 5°, the curvature of the bands is not very pronounced.

In the embodiment being described the number of planar mirrors on the prism is eight, but any even number of mirrors may be used so that the scanning and reconstruction locations can be placed diametrically opposite one another around the prism.

In order that the number of angularly separated bands scanned in the infra-red scene shall equal the number of planar mirrors on the prism, all eight planar mirrors have different tilt angles from one another. To ensure that one band is continuous with the adjacent band, the two mirrors which scan these bands differ in tilt angle from one another by half the angular length of the linear array of detectors. Allowing for the doubling of deflection
angle by the mirror, the two bands will then be contiguous.
The angular length of the array is defined herein as that
angle at which the linear array is observed from the
centre of lens 22. In this embodiment the angular length
of the array is $2^\circ$ and to a close approximation the angular
length is given by the length of the array divided by the
focal length of lens 22. The difference in tilt angle
between mirrors scanning contiguous bands is $1^\circ$ and the
difference in tilt angle between any two mirrors is a
multiple of $1^\circ$.

For convenience in illustration and discussion,
the tilt angles of the planar mirrors are measured from a
reference plane 17 normal to axis 2. In Figure 1, the tilt
angles of mirrors 3 and 4 are $48.5^\circ$ and $41.5^\circ$ and these
two diametrically opposite mirrors scan and reconstruct
the top and bottom bands of the picture. The beam of
radiation 18 at an angle of $7^\circ$ with the horizontal, is that
from a picture element in the middle of the top band.
Mirror 3 reflects beam 18 parallel to axis 2 and lens 22
images said picture element onto the detector in the
centre of array 14. This detector is coupled, _via_ an
amplifier 40, to the centre light source of array 15. The
light beam from this light source is collimated by lens
16 and reflected off mirror 4 to produce a beam 19 which
appears to come from a distant virtual source $7^\circ$ above the
horizontal. Thus the top band is viewed in its correct
relative location and, if the end detector 20 is coupled
to end light source 21 and all the remaining detectors
are coupled to the remaining sources in a corresponding
manner, the picture detail within the band will also be
viewed erect.

When the prism has made half a turn about axis 2,
the locations of mirrors 3 and 4 are reversed and mirror 4
now scans the bottom band in the scene and mirror 3 reconstructs it as the bottom band in the visible scene.
The remaining 6 bands in the picture are scanned and reconstructed by the diametrically opposite mirror pairs 8, 9; 10, 11 and 12, 13. The tilt angles for all eight mirrors are given in the following table.

| Mirror pair | Angles | |
|---|---|---|
| 3, 4 | $41.5^{\circ}$ | $48.5^{\circ}$ |
| 8, 9 | $42.5^{\circ}$, | $47.5^{\circ}$ |
| 10, 11 | $43.5^{\circ}$, | $46.5^{\circ}$ |
| 12, 13 | $44.5^{\circ}$, | $45.5^{\circ}$ |

The order in which the mirror pairs are placed around the periphery of the prism is immaterial and only affects the order in time in which the bands are scanned as the prism rotates. An order the mirrors which results in adjacent bands being scanned one after another in steady sequence up or down the picture may be rejected in preference to those orders of the mirror for which the bands are scanned in pseudo-random sequence. In the last-mentioned case flicker in the reconstructed scene may thus be reduced.

Referring to Figure 3, the selection of tilt angles of diametrically opposite mirror pairs will be discussed. The tilt angle of all the mirrors may be derived from a common tilt angle $\theta$, for example $45^{\circ}$. Once the tilt angle for one mirror has been obtained by adding an angle $\phi$, for example $3.5^{\circ}$ to 0 to give a tilt angle of $48.5^{\circ}$, the angle for the diametrically opposite mirror is obtained. This angle is then $\phi - \theta$, which is $41.5^{\circ}$ in this example. Thus the tilt angles of diametrically opposite mirror pairs are complementary to one another and, from the two triangles of Figure 3, the angle between the mirrors of a pair remains $180^{\circ} - 2\theta$, that is $90^{\circ}$ in this example.

To achieve the "straight-through" layout of Figure 1, $\theta$ is chosen to be $45^{\circ}$ and the eight mirror tilt values are distributed symmetrically around this common tilt angle. Alternatively, $\theta$ may be chosen to be $0^{\circ}$, the prism then being substantially parallel-sided. The tilt angles are again distributed symmetrically around this common tilt angle. The optical axes of the imaging optics at the scanning and reconstruction locations are then parallel to one another and at right angles to axis 2. The axes of the lenses corresponding to lenses 16 and 22 in Figure 1 then lie in the plane of section 7 in Figure 2 and the linear arrays of detectors and sources are then normal to section 7. Radiation from the scene or the sources is generally parallel to the plane of section 7 but is now reflected off a mirror at the scanning or reconstruction location to remain generally in this plane.

The imaging apparatus has been described in relation to thermal infra-red radiation. It will be clear, that the general purpose of the apparatus is to render visible a scene scanned with non-visible radiation. This radiation may be of different wavelengths, shorter or longer than that of visible light, and may, for example, be ultra-violet radiation, infrared radiation of wavelength longer than 10 microns, or even short wavelength microwave radiation. The scene may be either naturally radiant at these wavelengths or may be irradiated by a corresponding radiation source.

**0052395**
1.10.1981

CLAIMS

1.      Apparatus for producing a visible image of a
scene by means of non-visible radiation from the scene,
which apparatus, in this order, comprises: a mirror
prism which is rotatable about an axis and which includes a
plurality of planar mirrors which form an equiangular
polygon in a cross-section normal to said axis and which
make a sequence of various tilt angles with said axis, an
objective lens arranged to receive radiation from said
scene via said planar mirrors, a linear array of radiation-sensitive detectors, a linear array of light sources
coupled one each <u>via</u> an amplifier to a corresponding
detector in said detector array, and viewing means arranged
to receive the light beams reflected by said planar
mirrors and coming from the light sources, characterized
in that said prism has an even number of planar mirrors,
in that said scanning and reconstruction locations are on
diametrically opposite sides of said prism, in that the
difference in tilt angles of the planar mirrors is an
integral multiple of half the angular length, of said
detector array, and in that the sequence of tilt angles
around the prism is such that the sum of the tilt angles
of any pair of mirrors simultaneously present at the
scanning and reconstruction locations is constant.

2.      Apparatus as claimed in Claim 1, characterized
in that the mean angle of tilt of the planar mirrors is
45°.

3.      Apparatus as claimed in Claim 1 or Claim 2,
characterized in that an eyepiece is provided which
images the planar mirror disposed at the reconstruction
location onto an exit pupil of the apparatus.

1/1

FIG.1

FIG.2

FIG.3

PHB 32733

0052395

European Patent
Office

**EUROPEAN SEARCH REPORT**

Application number

EP 81 20 1210

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | FR - A - 2 350 749 (MARCONI) <br> * Page 3, lines 8-27; page 13, claim 1; page 15, claim 14 * <br> & US - A - 4 117 331 <br> -- | 1,2 | H 04 N 3/08 |
| A | US - A - 4 204 122 (MENKE) <br> ---- | 1 | |

TECHNICAL FIELDS
SEARCHED (Int.Cl. 3)

H 04 N 3/08

CATEGORY OF
CITED DOCUMENTS

X: particularly relevant if
taken alone
Y: particularly relevant if
combined with another
document of the same
category
A: technological background
O: non-written disclosure
P: intermediate document
T: theory or principle
underlying the invention
E: earlier patent document,
but published on, or after
the filing date
D: document cited in the
application
L: document cited for other
reasons

&: member of the same patent
family,
corresponding document

| | The present search report has been drawn up for all claims | | |
|---|---|---|---|
| Place of search <br> The Hague | Date of completion of the search <br> 19-02-1982 | Examiner <br> SIX | |

EPO Form 1503.1  06.78